**Europäisches Patentamt**

(19) **European Patent Office**

**Office européen des brevets**

(11) Veröffentlichungsnummer: **0 064 607**
**B1**

(12) **EUROPÄISCHE PATENTSCHRIFT**

(45) Veröffentlichungstag der Patentschrift:
25.09.85

(51) Int. Cl.⁴: **C 23 F 1/00**, C 25 F 3/04,
H 01 G 9/04

(21) Anmeldenummer: **82103119.2**

(22) Anmeldetag: **13.04.82**

(54) **Verfahren zum Ätzen einer rekristallisierten Aluminiumfolie für Elektrolytkondensatoren.**

(30) Priorität: **07.05.81 DE 3118151**

(43) Veröffentlichungstag der Anmeldung:
**17.11.82 Patentblatt 82/46**

(45) Bekanntmachung des Hinweises auf die Patenterteilung:
**25.09.85 Patentblatt 85/39**

(84) Benannte Vertragsstaaten:
**DE FR IT**

(56) Entgegenhaltungen:
**EP - A - 0 003 125**
**CH - A - 305 732**
**DE - A - 2 537 725**
**DE - A - 2 650 762**
**DE - C - 976 532**
**US - A - 3 779 877**
**US - A - 4 042 475**

(73) Patentinhaber: **Siemens Aktiengesellschaft, Berlin und München Wittelsbacherplatz 2, D-8000 München 2 (DE)**

(72) Erfinder: **Löcher, Günter, Dipl.-Phys., Uhlandstrasse 14, D-7921 Nattheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Ätzen einer rekristallisierten Aluminiumfolie für Elektrolytkondensatoren, indem in einer ersten Ätzstufe eine eletrolytische Tunnelätzung durchgeführt wird.

Ein derartiges Verfahren ist aus der DE-PS 28 01 218 (entspricht EP-AI-0 003 125) bekannt. In der ersten Ätzstufe erfolgt dabei in chloridhaltiger Lösung die Herstellung einer Tunnelstruktur, wobei die Ätztunnels mit Wachstumsgeschwindigkeiten von einigen μm/s mit ca. 0,2 μm Porendurchmesser autokatalytisch in kristallorientierter [100]-Richtung in das rekristallisierte Aluminium-Gitter einwachsen. Die Aufweitung des Ätztunnels bei der Weiter-Ätzung erfolgt beim bekannten Verfahren ebenfalls elektrolytisch in Chlorid-Ionen enthaltender Lösung, wobei eine dem Potentialbereich unterhalb des Lochfrasspotentials des Aluminiums zugehörige Ätzstromdichte angewendet wird. Die dabei maximal anwendbare und relativ geringe Ätzstromdichte wird durch die Passivstromdichte des Aluminiums in der jeweiligen Lösung bestimmt. Liegt nämlich die auf die tatsächliche geraute Folienoberfläche bezogene Ätzstromdichte oberhalb der maximalen Passivstromdichte, so wird grober Lochfrass erzeugt. Bei der elektrolytischen Tunnelerweiterung besteht daher die Gefahr, dass bei unregelmässiger Stromdichteverteilung, hervorgerufen durch die Anordnung der Kontaktwalzen, und bei Folien mit unregelmässiger oder durchweg geringer Tunneldichte (entsprechend einer geringen Oberfläche) die Tunnelstruktur ganz oder teilweise durch groben Lochfrass zerstört wird. Weiterhin erfolgt bei elektrolytischer Ätzung ein hoher Ätzladungsumsatz, was zum einen hohen Energieverbrauch bedeutet und zum anderen einen beträchtlichen apparativen Aufwand für die Zurverfügungstellung der erforderlichen Strommengen.

Aus der CH-A-305 732 ist ein Verfahren zum Ätzen von Aluminiumfolien in chloridhaltigen Lösungen bekannt, bei dem in einer ersten Stufe stromlos, das heisst rein chemisch, geätzt wird und bei der Weiterätzung ein Gleich- oder Wechselstrom angewendet wird. Die Anwendung chloridhaltiger Ätzbäder in allen Stufen führt allerdings zu chloridhaltigen schwerlöslichen Deckschichten, die in aufwendigen Waschprozessen wieder entfernt werden müssen, da Chlorid-Ionen in Elektrolytkondensatoren schädigend wirken. Ausserdem bildet sich bei der anfänglich stromlosen Ätzung nicht die gewünschte Tunnelstruktur.

Aufgabe der Erfindung ist es, ein Verfahren zum Ätzen einer rekristallisierten Aluminiumfolie der eingangs genannten Art anzugeben, mit dem die vorstehend aufgezeigten Schwierigkeiten umgangen werden.

Diese Aufgabe wird bei einem Verfahren der eingangs genannten Art erfindungsgemäss dadurch gelöst, dass die Weiter-Ätzung zur Tunnelerweiterung in einer oder mehreren Ätzstufen chemisch in einer von Halogen-Ionen freien Lösung erfolgt.

Das erfindungsgemässe Ätzverfahren zeichnet sich dadurch aus, dass entgegen dem bekannten Verfahren der elektrolytischen Zweistufenätzung auch mit einer Abnahme der Folienrauhung in den Tunnelerweiterungsstufen kein grober Lochfrass erzeugt wird. Die Tunnelerweiterung bei der erfindungsgemässen, rein chemischen Weiter-Ätzung ist – im Gegensatz zur mit konstantem Ätzabtrag ablaufenden elektrolytischen Tunnelerweiterung – unabhängig von der vorherigen Rauhung der Folie in der Tunnelbildungsstufe, so dass ein konstanter Tunneldurchmesser erzeugt wird.

Weiterhin zeichnet sich das erfindungsgemässe Verfahren dadurch aus, dass mit seiner Anwendung eine beträchtliche Energieeinsparung verbunden ist. Es werden nämlich – verglichen mit der bekannten elektrolytischen Zweistufenätzung – nur ca. 20% der gesamten äquivalenten Ätzladung elektrolytisch umgesetzt. Verbunden damit ist ein geringerer apparativer Aufwand, da bei der Installation und dem Betrieb von Ätzgleichrichtern und der Ausrüstung mit Kathodenmaterial (meist Silber) für die Tunnelerweiterungsstufen ebenfalls Einsparungen erfolgen.

Bei der Weiter-Ätzung in einer von Halogen-Ionen freien, vorzugsweise Nitrat-Ionen enthaltenden, Lösung durchläuft die Aluminiumfolie nur zu Beginn des Ätzverfahrens in der elektrolytischen Tunnelbildungsstufe einen chloridhaltigen Elektrolyt. Bei der anschliessenden chemischen Ätzung findet eine Auswaschung von Chlorid-Ionen statt, und es wird durch die gleichmässige Aluminiumablösung die Bildung von chloridhaltigen, schwerlöslichen Deckschichten vermieden. Dies führt zur Verbesserung der elektrischen Werte von mit dem erfindungsgemässen Verfahren hergestellten Elektrolytkondensatoren, da auf der Folie verbleibende Chlorid-Ionen bekanntlich schädigende Einflüsse ausüben.

Weiterbildungen der Erfindung bestehen darin, dass die Tunnelbildung mit konstantem Anodenpotential oder mit einer Stromdichte durchgeführt wird, die dem zeitlichen Stromdichteverlauf bei potentiostatischer Ätzung angenähert ist.

Gemäss einer bevorzugten Ausführungsform werden Lösungen verwendet, die $HNO_3$ und/oder AL $(NO_3)_3$ enthalten, wobei die Lösungen vorzugsweise beispielsweise 1 Gew.% bis 30 Gew.% $HNO_3$ bzw. 0,2 Mol/l bis 2 Mol/l Al $(NO_3)_3$ enthalten und bei Ätztemperaturen von 40° bis 95°C angewendet werden.

Je höher dabei die Ätztemperatur gewählt wird, um so schneller läuft die Tunnelerweiterung durch Aluminiumauflösung ab. Bei Verwendungen von Al $(NO_3)_3$-Lösungen sind wegen der geringeren Auflösegeschwindigkeit bevorzugterweise Ätztemperaturen oberhalb 90°C einzustellen, um nicht zu lange Ätzzeiten zu erhalten.

Um die Gefahr der sogenannten «Überätzung» zu verringern, ist es deshalb vorteilhaft, die Weiter-Ätzung in mehreren Bädern mit stufenweise

herabgesetzten Al-Auflösegeschwindigkeiten durchzuführen. Die Herabsetzung der Al-Auflösegeschwindigkeit kann durch stufenweise herabgesetzte Badtemperaturen oder Badkonzentrationen erfolgen.

Neben den beschriebenen Nitrat-Ionen enthaltenden Lösungen ist es auch möglich, Laugen enthaltende Ätzelektrolyte (z.B. NaOH) zu verwenden, jedoch ist dabei unter Umständen eine anschliessende Behandlung in Säure erforderlich, um unerwünschte Deckschichten zu entfernen.

Weitere Vorteile des erfindungsgemässen Verfahrens werden anhand von Ausführungsbeispielen im folgenden erläutert.

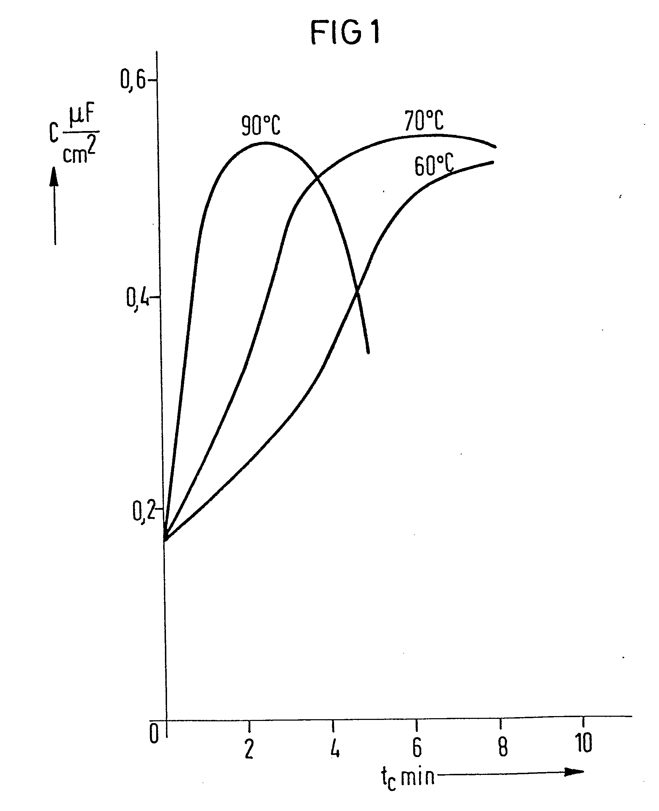

In der dazugehörenden Zeichnung zeigen die Figuren 1 bis 3 den Verlauf der spezifischen Kapazität als Funktion der Ätzzeit $t_c$.

Sämtliche Ausführungsbeispiele beziehen sich dabei auf die Ätzbehandlung einer rekristallisierten Aluminiumfolie, die vor der Ätzbehandlung in bekannter Weise einer Wärmebehandlung unterzogen wurde, um unerwünschte und durch das Walzen hervorgerufene Verschiebungen im Kristallgefüge auszubessern. Die Folien (75 μm Dicke) wurden dabei in einer ersten Ätzstufe elektrolytisch mit einer dem zeitlichen Stromdichteverlauf bei potentiostatischer Tunnelbildung angenäherten Stromdichte in einer Chlorid-Ionen enthaltenden Lösung geätzt, wobei die Tunnelstruktur mit Tunneldurchmessern $\leq 0,1$ μm ausgebildet wurde. Nach der in den Ausführungsbeispielen im einzelnen angegebenen Behandlung wurden die Folien bei 400V Formierspannung formiert und die spezifische Kapazität bestimmt, die ein Mass für die Aufrauhung der Aluminiumfolie ist.

Ausführungsbeispiel 1:
Drei verschiedene Folienprüflinge wurden nach der elektrolytischen Tunnelbildung in $HNO_3$-Lösungen (11Gew.%) bei Badtemperaturen von 60°C, 70°C und 90°C weitergeätzt. Dabei wurden maximale spezifische Kapazitäten von ca. 0,54 μF/cm² erhalten, die in Abhängigkeit von der Badtemperatur in verschieden langen Zeitdauern erreicht wurden.

Der Figur 1 ist zu entnehmen, dass bei der erfindungsgemässen rein chemischen Tunnelerweiterung wesentlich kürzere Ätzzeiten als bei der herkömmlichen elektrolytischen Tunnelerweiterung erreicht werden. Dies ist darauf zurückzuführen, dass bei dem bekannten Verfahren die Weiter-Ätzung mit einer dem Potentialbereich unterhalb des Lochfrasspotentials des Aluminiums zugehörigen Ätzstromdichte durchgeführt werden muss, um den groben Lochfrass zu vermeiden. Durch die relativ geringen Ätzstromdichten ist eine wesentlich längere Behandlungszeit erforderlich, um zu den für HV-Anoden notwendigen Tunneldurchmessern von ca. 1 μm bis 2 μm zu gelangen.

Dagegen sind beim erfindungsgemässen Verfahren insbesondere bei höheren Badtemperaturen wesentlich geringere Behandlungszeiten möglich. Allerdings muss darauf geachtet werden, dass die optimale Ätzzeit nicht überschritten wird, da dann die spezifische Kapazität wegen der «Überätzung» wieder abnimmt. Dies ist insbesondere der Kurve für eine Badtemperatur von 90°C zu entnehmen.

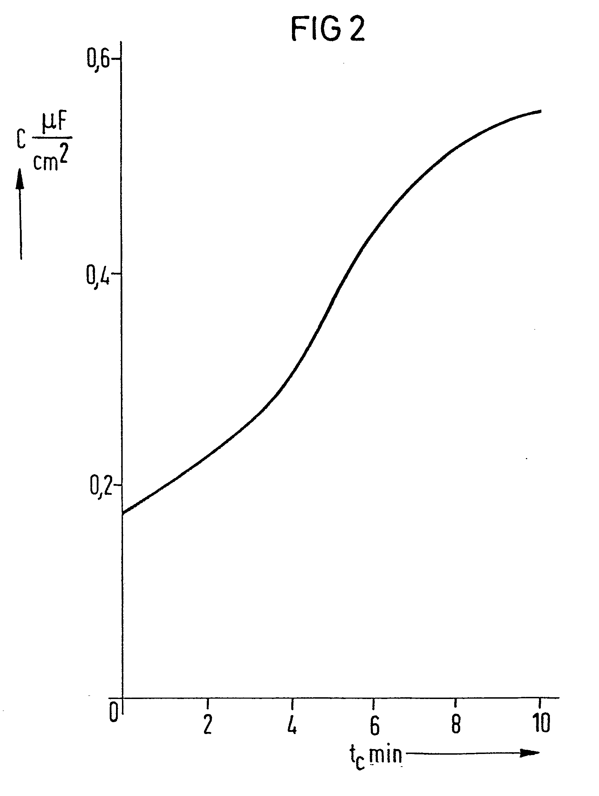

Ausführungsbeispiel 2:
Bei einem weiteren Prüfling wurde die Tunnelerweiterung nach dem erfindungsgemässen Verfahren in einem Bad durchgeführt, das Al $(NO_3)_3$ in einer Konzentration von 1 Mol/l enthielt. Die Badtemperatur betrug 95°C. Wie der Figur 2 zu entnehmen ist, ergibt sich dabei eine maximale spezifische Kapazität von ca. 0,55 μF/cm². Der Figur 2 ist zu entnehmen, dass bei aluminiumnitrathaltigen Bädern die Gefahr der «Überätzung» auch bei hohen Badtemperaturen wegen der geringen Auflösegeschwindigkeit nicht auftritt.

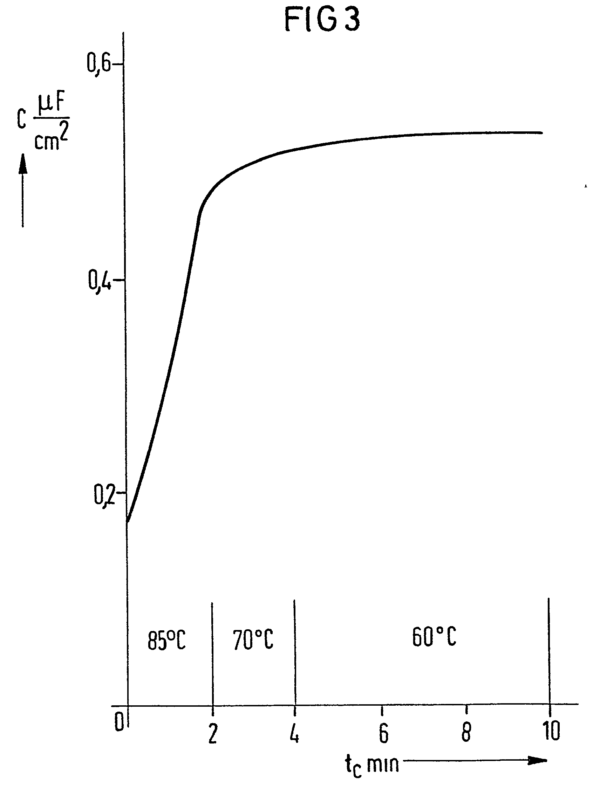

Ausführungsbeispiel 3:
Bei einem weiteren Prüfling erfolgte die Weiter-Ätzung in drei Ätzstufen in Bädern mit $HNO_3$-Lösungen (11Gew.%). Das erste Bad hatte eine Temperatur von 85°C, das zweite von 70°C und das dritte von 60°C. Es wurde wie beim Ausführungsbeispiel 1 eine maximale spezifische Kapazität von 0,54 μF/cm² erreicht. In der Figur 3 ist der Anstieg der spezifischen Kapazität in Abhängigkeit von Ätzzeit und Badtemperatur dargestellt. Der Figur ist zu entnehmen, dass bei der Verwendung mehrerer aufeinander folgender chemischer Ätzstufen mit stufenweise herabgesetzten Badtemperaturen die Gefahr der «Überätzung» ebenfalls verringert ist.

Die Ätzparameter der Tunnelbildungsstufe bei der elektrolytischen ersten Ätzstufe werden bei den Ausführungsbeispielen so gewählt, dass eine möglichst hohe Tunneldichte mit einem möglichst geringen Anteil an grobem Lochfrass erreicht wird. Die elektrolytische Ätzung wird dabei nach Bildung der Ätztunnel beendet, da die Weiter-Ätzung mit den hohen Ätzstromdichten in der für die Tunnelbildung optimierten Ätzstufe neben der Vergrösserung der Tunneldurchmesser einen unregelmässigen groben Aluminiumabbau zur Folge hätte, wodurch die Tunnelstruktur wieder teilweise zerstört würde.

**Patentansprüche**

1. Verfahren zum Ätzen einer rekristallisierten Aluminiumfolie für Elektrolytkondensatoren, indem in einer ersten Ätzstufe eine elektrolytische Tunnelbildung durchgeführt wird, dadurch gekennzeichnet, dass die Weiter-Ätzung zur Tunnelerweiterung in einer oder mehreren Ätzstufen chemisch in einer von Halogen-Ionen freien Lösung erfolgt.

2. Verfahren nach Anspruch 1, dadurch gekennzeichnet, dass die Tunnelbildung mit konstantem Anodenpotential oder mit einer Stromdichte durchgeführt wird, die dem zeitlichen Stromdichteverlauf bei potentiostatischer Ätzung angenähert ist.

3. Verfahren nach einem der Ansprüche 1 oder 2, dadurch gekennzeichnet, dass die Weiter-Ätzung mit Nitrat-Ionen enthaltenden Lösungen erfolgt.

4. Verfahren nach Anspruch 3, gekennzeichnet durch die Verwendung von Lösungen, die $HNO_3$ und/oder Al $(NO_3)_3$ enthalten.

5. Verfahren nach Anspruch 4, gekennzeichnet durch die Verwendung von Lösungen mit 1 Gew.% bis 30 Gew.% $HNO_3$ bzw. 0,2 Mol/l bis 2 Mol/l Al $(NO_3)_3$.

6. Verfahren nach einem der Ansprüche 1 bis 5, gekennzeichnet durch die Verwendung von Lösungen mit Temperaturen von 40°C bis 95°C.

7. Verfahren nach einem der Ansprüche 1 bis 6, dadurch gekennzeichnet, dass die Weiter-Ätzung in mehreren Bädern mit stufenweise herabgesetzten Al-Auflösegeschwindigkeiten durchgeführt wird.

8. Verfahren nach Anspruch 7, dadurch gekennzeichnet, dass das stufenweise Herabsetzen der Al-Auflösegeschwindigkeit mit stufenweise herabgesetzten Badtemperaturen oder Badkonzentrationen erfolgt.

## Revendications

1. Procédé pour corroder une feuille d'aluminium recristallisée pour des condensateurs électrolytiques, en effectuant, dans un premier stade de corrosion, une formation de tunnel par voie électrolytique, caractérisé en ce qu'il consiste à poursuivre la corrosion pour l'élargissement du tunnel par voie chimique, en un ou plusieurs stades de corrosion, dans une solution exempte d'ions halogène.

2. Procédé suivant la revendication 1, caractérisé en ce qu'il consiste à effectuer la formation du tunnel avec un potentiel d'anode constant ou avec une densité de courant, qui est proche de la variation de la densité du courant en fonction du temps pour une corrosion potentiostatique.

3. Procédé suivant l'une des revendications 1 ou 2, caractérisé en ce qu'il consiste à poursuivre la corrosion avec des solutions contenant des ions nitrate.

4. Procédé suivant la revendication 3, caractérisé par l'utilisation de solutions qui contiennent $HNO_3$ et/ou Al $(NO_3)_3$.

5. Procédé suivant la revendication 4, caractérisé par l'utilisation de solutions ayant de 1% en poids à 30% en poids de $HNO_3$ ou de 0,2 mole/l à 2 moles/l d'Al $(NO_3)_3$.

6. Procédé suivant l'une des revendications 1 à 5, caractérisé par l'utilisation de solutions ayant des températures de 40°C à 95°C.

7. Procédé suivant l'une des revendications 1 à 6, caractérisé en ce qu'il consiste à poursuivre la corrosion dans plusieurs bains, à vitesses de dissolution d'Al qui diminuent par paliers.

8. Procédé suivant la revendication 7, caractérisé en ce que la diminution par paliers de la vitesse de dissolution d'Al s'effectue par des températures de bain ou par des concentrations de bain, qui sont réduites par paliers.

## Claims

1. A method of etching a recrystallized aluminium foil for electrolytic capacitors, in which in a first etching step, electrolytic tunnel formation is carried out, characterised in that the further etching for widening the tunnel is carried out chemically in one or more etching steps in a solution which is free from halogen ions.

2. A method as claimed in Claim 1, characterised in that the tunnel formation is carried out with a constant anode potential, or with a current density which approximates to the current density curve with respect to time during potentiostatic etching.

3. A method as claimed in Claim 1 or Claim 2, characterised in that the further etching is carried out with solutions which contain nitrate ions.

4. A method as claimed in Claim 3, characterised by the use of solutions which contain $HNO_3$ and/or Al $(NO_3)_3$.

5. A method as claimed in Claim 4, characterised by the use of solutions having 1% by weight to 30% by weight of $HNO_3$ or 0.1 mol/l to 2 mol/l of Al $(NO_3)_3$.

6. A method as claimed in one of Claims 1 to 5, characterised by the use of solutions having temperatures of 40°C to 95°C.

7. A method as claimed in one of Claims 1 to 6, characterised in that the further etching is carried out in a plurality of baths at stepwise decreasing Al-dissolving speeds.

8. A method as claimed in Claim 7, characterised in that the stepwise decrease of the Al-dissolving speed is carried out with stepwise decreasing bath temperatures, or bath concentrations.

# FIG 1

# FIG 2

# FIG 3